# EUROPEAN PATENT SPECIFICATION

(11) **EP 2 108 294 B1**
(45) Date of publication and mention of the grant of the patent: **17.10.2012**
(21) Application number: 08700630.0
(22) Date of filing: 11.01.2008
(51) Int. Cl.: A47J 37/10, A47J 37/06, A47J 37/04, A21B 1/02

(54) **LIFTING-COVER TYPE FRYING-ROASTING DEVICE**
BRAT-RÖSTVORRICHTUNG MIT ANHEBBARER ABDECKUNG
APPAREIL À FRIRE-RÔTIR DE TYPE À COUVERCLE À SOULÈVEMENT

(30) Priority: 17.01.2007 CN 200720006113 U
(43) Date of publication of application: 14.10.2009
(73) Proprietor: Tsann Kuen (China) Enterprise Co., Ltd, Xiamen Fujian 361006 (CN)
(72) Inventor: LIN, Jing, Xiamen, Fujian 361006 (CN); LIU, Tachi, Xiamen, Fujian 361006 (CN)
(74) Representative: Garavelli, Paolo
(86) International application number: PCT/CN2008/000075
(87) International publication number: WO 2008/089651

(56) References cited:
- EP-A1- 0 094 637
- EP-B1- 0 657 132
- CN-Y- 200 998 178
- JP-A- 08 173 326
- US-A- 4 531 048
- US-B1- 6 230 702

## Description

### Technical field

The present invention relates to an electric heating cooker, especially to an electrical frying-roasting device.

### Background of the invention

The electrical frying-roasting device of the present technology, comprising a bottom base which has an open top, there is an electric heating frying-roasting plate disposed on the open top, and an upper cover for covering said frying-roasting plate. When frying or roasting the food, firstly turn on the power; secondly remove the upper cover and put the food on the frying-roast plate; then cover said upper cover on the frying-roast plate. When the food is about to be ready, remove the upper cover again, then flip the food on the frying-roasting plate; finally take the food out of the device when it is ready. During the process, it needs a space to accommodate said upper cover after removing it from the frying-roast plate, thus it causes inconvenience; furthermore, it may be difficult to clean the wall behind the electrical frying-roasting device because the hot oil from the food would spatter to it. US-A-4531048, EP-A-0094637, JP-A-08 173326 and EP-B-0657132 disclose frying-roasting devices according to the preamble of claim 1.

### Summary of the invention

The objective of the present invention is to provide a lifting-cover frying-roasting device, wherein its upper cover can be lifted or put down with the jointed shaft of the bottom base, moreover, it is liftable and to be separated from the bottom base for cleaning.

The technical solution applied in the present invention is: a lifting-cover frying-roasting device comprising a bottom base which has open top; and an electric heating frying-roasting plate disposed on the open top; there is an upper cover be hinged jointly with the upper-rear of the bottom base, and covers the electric heating frying-roasting plate; there is respectively a short jointed shaft extending outward at the back end of two sides of the upper cover; and there is respectively an opening orbit disposed on the two sides of the back end of the bottom base; two jointed shafts of the upper top are inserted in the orbit corresponding to the back end of the bottom base respectively, and is selectable to be lifted or clamped to form a hinging connection.

There is respectively a boss extending backwards at two sides of the back end of the bottom base, a r-shaped orbit whose opening is from its back end and extends toward its front lower part is respectively set in the inside of each boss; two short jointed shafts are inserted in the corresponding r-shaped orbit respectively, to form a hinging connection.

There is respectively a block wall that extends from the back end to the inside of each boss, the height of two blocking walls is lower than the opening of the r-shaped orbit.

There is a buckle set at the front of said upper cover, said buckle is jointed with the joint deck at the front end of the bottom base for clamping said upper cover.

Said upper cover is composed of a glass panel, a plastic back connecting member and a plastic front connecting member; there is a short jointed shaft extending outward from the two sides of the back end of the back connecting member respectively; and a joint set at the front of the front connecting member; said glass panel is fastened between the front end of the back connecting member and the back end of the front connecting member.

There is an oil storing plate arranged inside said bottom base. Said oil storing plate is used to contain the oil droplet from the cooking food.

The lifting-cover type frying-roasting device of the present invention, wherein there is respectively a short jointed shaft extending outward at the back end of two sides of the upper cover; and there is respectively a opening orbit disposed on the two sides of the back end of the bottom base; the two jointed shafts are inserted in the orbit corresponding to the back of the bottom base to form hinging connection, the open of said upper cover can prevent the hot oil spattering to the wall behind; the two jointed shafts can be withdrawn from the orbit corresponding to the back end of the bottom base, then remove said upper cover. So the upper cover can be hinged joint with the bottom base and separated from the bottom base for cleaning. There is respectively a boss extending backwards at two sides of the back end of the bottom base, a r-shaped orbit whose opening is from its back end and extends toward its front lower part is respectively set in the inside of each boss; and there is a blocking wall that extends from the back end to the inside of each boss, the height of two blocking walls is lower than the opening of the r-shaped orbit; when the upper cover is opened, the two jointed shafts fall to the bottom end of the corresponding orbit respectively, while the bottom surface of the upper cover lean the bottom end of the electric fry-roasting plate or the top surface of the upper cover lean the blocking wall; so the upper cover is kept upright automatically; thus it do no need to lean the upper cover on the wall, and convenient to accommodate and use. Especially, there is a buckle set at the front of said upper cover, said buckle is joint with the joint deck at the front end of bottom. Moreover, the bottom base, oil storing plate, electric heating frying-roasting plate and upper cover are integrated as an entirety, thus it is convenient in accommodation, assembly and transportation. Said upper cover is composed of a glass panel, a plastic back connecting member and a plastic front connecting member, and the cooking process can be observed even when the upper cover is covered. An oil storing plate is arranged inside the bottom base is used for containing the oil droplet from the cooking food, so it would not contaminate the cooking surface.

### Brief description of the drawings

Fig.1 illustrates a schematic view of an exploded structure of the preferred embodiment of the lifting-cover type frying-roasting device of the present invention.
Fig.2 illustrates a sectional view of the embodiment of fig.1.
Fig.3 illustrates a rear view of the embodiment of fig.1.
Fig.4 illustrates a vertical view of the embodiment of fig.1.
Fig.5 illustrates a vertical view of the opening upper cover of the embodiment of fig.1.
Fig.6 illustrates a sectional view of the opening upper cover of the embodiment of fig.1.

### Detailed description of the embodiments

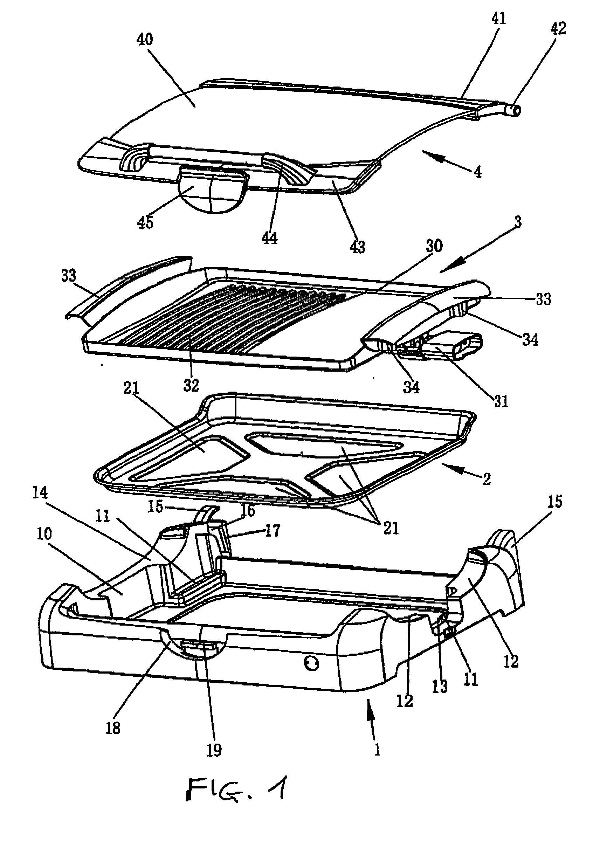

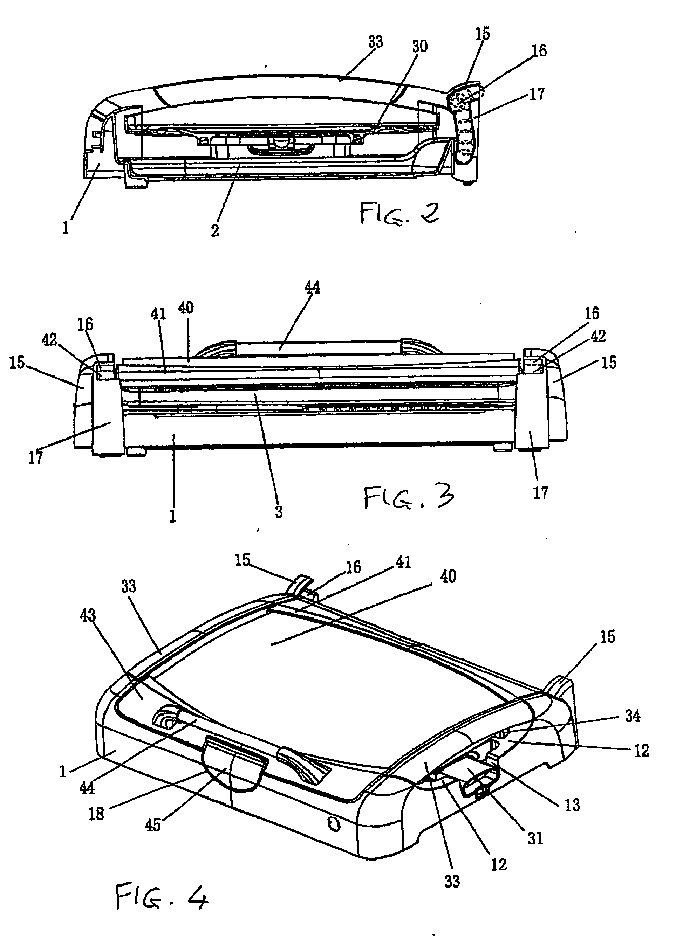

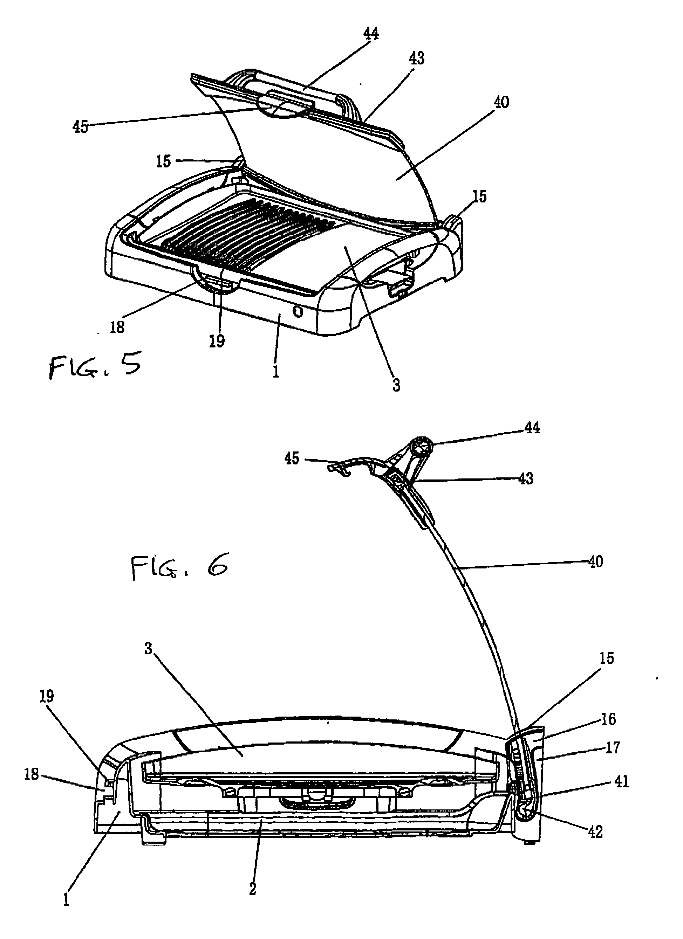

The exploded structure of the preferred embodiment of the lifting-cover type frying-roasting device as showed in fig.1. Said lifting-cover type frying-roasting device is composed of a bottom base 1, an oil storing plate 2, a electric heating frying-roasting plate 3 and an upper cover 4. Those four parts can be disassembled for cleaning, or may be assembled together for use as illustrated in fig.4 and fig. 5.

There is a boss 11 respectively set at the opening of the top end of bottom base 1 and four corners of the bottom of the open space 10 inside said bottom base 1. And a curved groove 12 disposed at the top surface of the right side wall of said bottom base 1, the middle of groove 12 forms a small approximate rectangular groove 13 downward. A curved groove 14 is set at the top surface of the left side wall of said bottom base, wherein said groove 14 is opposite the groove 12 of the right side wall. There is a boss 15 respectively extending backward at two sides of the back end of the bottom base, a r-shaped orbit 16 whose opening is from its back end and extends toward its front lower part is respectively set in the inside of each boss 15; please refer to fig.2. There is respectively a blocking wall 17 that extends from the back end to the inside of each boss 15 of bottom base 1, the height of two blocking walls is lower than the opening of the r-shaped orbit, please refer to fig.3, there is a curved half-opened groove 18 set at the middle of the front end of bottom base 1, further comprising a buckle deck 19 disposed at the back side of the curved bottom of groove 18.

The top of the oil storing plate is open while its bottom is pressed with a plurality of depressed region for accumulating oil.

The main body of electric frying-roasting plate 3 is a plate body 30 with electric heating units, the middle of the right side of said plate body 30 is electrically connected to socket 31, and the inner bottom surface 32 of said plate body 30 is frying-roasting working surface. The left and right side of said plate body 30 is respectively arranged with a hanging ring 33 which extend upwardly and outwardly, and a supporting flange 34 is set respectively on the front and back side of the inward bottom surface of each hanging ring 33.

The upper cover 4 is composed of a slightly curved glass panel 40, a plastic back connecting member 41 and a plastic front connecting member 43. there is inserting slot at the front side surface of said back connecting member 41, a inserting card is fastened to the back end of glass panel 40; and a short jointed shaft 42 is extending outward at the back end of two sides of the back connecting member 41 respectively for connecting the back end of the bottom base 1. An inserting slot is set at the back surface of said front connecting member 43, a inserting card is fastened to the front end of glass panel 40; a handle 44 is set at the top surface of front connecting member 43; and a buckle 45 is set at the middle of the front end of said front connecting member 43.

Before cooking, firstly arrange the oil storing plate in the open space 10 of the bottom base 1, the four corners of the bottom of oil storing plate are being respectively supported by the boss 11 inside the oil storing plate 2. The electric heating plate 3 is disposed on the open space 10 inside the bottom base 1, and located upon the oil storing plate 2. The supporting flange 34 on the left and right side of the electric heating plate 3 is respectively disposed at the top surface of the left side wall groove 14 of bottom base 1, and at the top surface of the right side wall groove 12. Said socket 31 of electric heating frying-roasting plate 3 is located in the small groove 13 of the right side wall of the bottom base 1. There is a jointed shaft 42 of upper cover 4 respectively inserted into the orbit 16 corresponding to the back end of bottom base 1 to form a hinging connection, said upper cover 4 clamps the plate body 30 of the electric heating frying-roasting plate 3 and covers said plate body 30. Please refer to fig. 4.

When cooking the food, firstly insert the electric wire into the socket 31 of the electric heating frying-roasting plate; then turn on the power. Turn the buckle 45 and make it to depart from the buckle deck 19, and then pull the handle 44 of upper cover 4 in a rear-upper direction, lift the upper cover 4, as showed in fig. 5. Afterward, the two short jointed shafts 42 of upper cover 4 can respectively slide downward along the r-shaped orbit corresponding to the back end of the bottom basel, finally slide to the bottom of the orbit 16, the bottom surface of back connecting member 41 of upper cover 4 would be blocked by the back surface of plate body 30 of the electric heating frying-roasting plate 3, while the top surface of back connecting member 41 would be blocked by the two blocking walls 17 of the bottom base 1. Thus the upper cover remains sloped, please refer to fig. 6. At this moment, the food can be disposed on the inner bottom surface 32 of plate body 30 of the electric frying-roasting plate 3; then pull the handle 44 of said upper cover 4 in a rear-upper direction, so the two short jointed shafts 42 of upper cover 4 can be respectively lifted along the r-shaped orbit 16 corresponding to the back end of bottom base 1 to the turning corner of the top of said orbit 16. Then slightly pull the handle 44 so the two short jointed shafts 42 of upper 4 can respectively turn around in the corresponding orbit 16, then clamp the upper cover 4 with the plate body 30 of said electric heating frying-roasting plate 3. During the cooking process, the oil droplets from the food would drop to the oil storing plate 2. When the food is about to be ready, pull the handle 44 of upper cover 4 in an upper-rear direction, open the upper cover 4 and keep it sloped; flip the food and then put it on the plate body 30 of said electric heating frying-roasting plate 3; finally take the food out of the device when it is ready. During the cooking process, even when the upper cover is lifted to open, the spattering oil would be blocked by the upper cover 4 and would not spatter to the wall behind the device. After cooking, the electric wire must be pulled from the socket 31 of said electric heating frying-roasting plate 3 firstly, then cut off the power. After the plate body 30 of said electric heating frying-roasting plate 3 cools down, clamp the upper cover 4 with the plate body 30 of said electric heating frying-roasting plate 3, so that the buckle 45 of the front end of upper cover 4 falls to the half-opened groove 28 of the front end of bottom base 1, and clamp with the buckle deck 19. Thus the four parts of the present embodiment integrated as an entirety, finally reverse the present embodiment with a 90, the back surface of two bosses 15 of the bottom base 1 are downward, such an arrangement would reduce the occupation area of the present embodiment in the kitchen.

In the cleaning process, firstly pull the handle 44 of said upper cover 4 in an upper-rear direction, so that the two short jointed shafts 42 of upper cover 4 can be respectively lifted along the r-shaped orbit 16 corresponding to the back end of bottom base 1 to the turning corner of the top of said orbit 16, then slightly pull the handle 44 backward, so the two short jointed shafts 42 of upper cover 4 is respectively withdrawn from the corresponding orbit. Thus take off the upper cover 4 from the back of said bottom base 1. Then pull the hanging ring 33 of the left and right side of the electric heating frying-roasting plate 3, take off said electric heating frying-roasting plate 3 from said bottom base. Then take the oil storing plate 2 from the bottom base. So the cleaning is convenient since the four parts is completely disassembled with each other.

### Industrial applicability

The lifting-cover type frying-roasting device of the present invention, wherein the upper cover is selectable to be lifted or clamped, and hinged joint with the bottom base, thus has a simple structure and easy to use, and has a good industrial applicability.

## Claims

1. A lifting-cover frying-roasting device comprising: a bottom base (1)which has an open top; an electric heating frying-roasting plate (3) disposed on said open top; an upper cover (4) that covers the electric heating frying-roasting plate (3); wherein there is respectively a short jointed shaft (42) extending outward at the back end of two sides of the upper cover (4); and there is respectively an opening orbit (16) disposed on the two sides of the back end of the bottom base; two jointed shafts (42) of the upper top are inserted in the orbit (16) corresponding to the back end of the bottom base (1) respectively, and is selectable to be lifted or clamped to form a hinging connection, wherein there is respectively a boss (15) extending backwards at two sides of the back end of the bottom base (1), a r-shaped orbit (16) whose opening is from its back end and extends toward its front lower part is respectively set in the inside of each boss (15); two short jointed shafts(14) of said upper cover (4) are respectively inserted in the r-shaped orbit (16) corresponding to the back end of bottom base (1) to form a hinging connection, **characterised in that** there is respectively a blocking wall (17) that extends from the back end to the inside of each boss (15), the height of two blocking walls (17) is lower than the opening of the r-shaped orbit (16), and there is a buckle (45) set at the front of said upper cover, said buckle (45) being clamped with the joint deck (19) at the front end of the bottom base (1) for clamping said upper cover (4), said upper cover (4) being composed of a glass panel (40), a back connecting member (41) made of plastic and a front connecting member (43) made of plastic; there is a short jointed shaft (42) extending outward from the two sides of the back end of the back connecting member (41) respectively; and a joint set at the front of the front connecting member (43) ; said glass panel (40) is fastened between the front end of the back connecting member (41) and the back end of the front connecting member (43), the two short jointed shafts (42) of the upper cover (4) being respectively adapted to slide downward along the r-shaped orbit (16) corresponding to the back end of the bottom base (1), finally slide to the bottom of the orbit (16), the bottom surface of the back connecting member (41) of the upper cover (4) being blocked by the back surface of the plate body (30) of the electric heating frying-roasting plate (3), while the top surface of the back connecting member (41) is blocked by the two blocking walls (17) of the bottom base (1), the upper cover (4) remaining thereby sloped.

2. A lifting-cover frying-roasting device according to claim 1, wherein there is an oil storing plate (2) arranged inside said bottom base (1).

3. A lifting-cover frying-roasting device according to claim 1, wherein, when said upper cover (4) is lifted to be open, and it remais sloped relative to the frying-roasting plate (3).

## Patentansprüche

1. Vorrichtung zum Braten/Rösten mit umklappbarem Deckel, einschließlich einer unteren Basis (1) mit offenem Oberteil, einer elektrischen Heizplatte für das Braten/Rösten (3), die sich auf dem offenen Oberteil befindet, einem oberen Deckel (4), welcher die elektrische Heizplatte zum Braten/Rösten (3) bedeckt, wo sich ein Stab mit einem kurzen Verbindungsstift (42) befindet, der aus dem hinteren Teil auf beiden Seiten des oberen Deckels (4) herausragt; wo sich eine offene Umlaufstrecke (16) auf beiden Seiten des hinteren Endstücks der unteren Basis befindet. Zwei im oberen Teil (42) verbundene Stäbe wurden ihrerseits in die offene Umlaufstrecke (16) eingefügt, und zwar jeweils am hinteren Ende der unteren Basis (1) und sind für das Heben oder den Stopp auswählbar. Sie bilden so eine Scharnierverbindung, in welcher sich eine Nabe (15) befindet, die sich hinten auf beiden Seiten des hinteren Endstückes der unteren Basis (1) hinzieht. Eine r-förmige Umlaufbewegungsstrecke (16), deren Öffnung sich auf ihrer hinteren Seite befindet und die sich über die untere Frontseite erstreckt, ist ihrerseits in jede der Naben (15) eingeführt. Zwei Stäbe mit kurzem Verbindungsstift (14) des oben genannten oberen Deckels (4) sind in die r-förmige Umlaufstrecke (16) eingefügt, in Nähe des hinteren Endstücks der unteren Basis (1), um so eine Scharnierverbindung zu bilden, charakterisiert durch die Tatsache, dass ein Anschlagflügel (17) vorhanden ist, der vom hinteren Endstück bis ins Innere einer jeden Nabe (15) geht. Die Höhe der beiden Anschlagflügel (17) ist niedriger als die Öffnung der r-förmigen Umlaufstrecke (16). Eine Zunge (45) befindet sich auf dem Frontteil des oben genannten, oberen Deckels; diese Zunge (45) ist mit einem Verbindungssteg (19) am Frontteil der unteren Basis (1) befestigt, um den genannten oberen Deckel (4) verschlossen zu halten. Der obere Deckel (4) besteht aus einem Glaspaneel (40), einem Verbindungselement hinten (41) aus Plastik und einem frontalen Verbindungselement (43) aus Plastik; einem Stab mit kurzem Verbindungsstift (42), der an beiden Seiten des hinteren Endstücks des hinteren Verbindungselements (41) herausragt, und einer Verbindung auf dem Frontteil des frontalen Verbindungselements (43). Dieses Glaspaneel (40) ist zwischen dem Frontstück des hinteren Verbindungselements (41) und dem hinteren Endstück des frontalen Verbindungselements (43) befestigt. Da die beiden Stäbe mit kurzem Stift (42) des oberen Deckels (4) so ausgelegt sind, dass sie längs der r-förmigen Umlaufstrecke (16) nach unten verlaufen, in der Nähe des hinteren Endstücks der unteren Basis (1), gleitet es zum Schluss bis zum Boden der Umlaufstrecke (16). Da die Bodenoberfläche des hinteren Verbindungselements (41) des oberen Deckels (4) durch die hintere Oberfläche des elektrischen Heizplattenkörpers (30) zum Braten/Rösten (3) blockiert ist, während die obere Oberfläche des hinteren Verbindungselementes (41) durch die zwei Blockierungswände (17) der unteren Basis (1) festgehalten wird, bleibt der obere Deckel (4) geneigt.

2. Vorrichtung zum Braten/Rösten mit umklappbarem Deckel gemäß Patentanspruch 1 mit einer Fettauffangplatte (2), die sich im Inneren der unteren Basis (1) befindet.

3. Vorrichtung zum Braten/Rösten mit umklappbarem Deckel gemäß Patentanspruch 1, wo der genannte obere Deckel (4) zum Öffnen des Gerätes gehoben wird und im Vergleich zur Braten/Röstplatte (3) geneigt stehen bleibt.

## Revendications

1. Appareil pour frire/rôtir avec couvercle rabattable comprenant : une base inférieure (1), avec la partie supérieure ouverte ; une plaque électrique chauffante pour frire/rôtir (3), disposée sur ladite partie supérieure ouverte ; un couvercle supérieur (4) qui couvre la plaque électrique chauffante pour frire/rôtir (3) ; où se trouve à son tour une tige avec joint à pivot court (42) qui sort de l'extrémité arrière sur les deux côtés du couvercle supérieur (4) ; et où se trouve à son tour une partie orbitale d'ouverture (16) disposée sur les deux côtés de l'extrémité arrière de la base inférieure ; deux tiges unies (42) de la partie supérieure sont insérées à leur tour dans la partie orbitale (16) correspondant à l'extrémité arrière de la base inférieure (1) respectivement, sélectionnable pour le soulèvement ou l'arrêt, de façon à constituer un joint charnière, dans lequel se trouve à son tour un moyeu (15) qui s'étend à l'arrière sur les deux côtés de l'extrémité arrière de la base inférieure (1), une partie pour mouvement orbital en forme de r (16) dont l'ouverture se trouve sur son côté arrière et s'étend vers la partie frontale inférieure est à son tour insérée dans chaque moyeu (15) ; deux tiges avec pivot à joint court (14) dudit couvercle supérieur (4) sont à leur tour insérées dans la partie orbitale en forme de r (16), en correspondance de l'extrémité arrière de la base inférieure (1), de façon à constituer un joint charnière, **caractérisé par le fait qu'**il existe une ailette d'arrêt (17) qui s'étend de l'extrémité arrière jusqu'à l'intérieur de chaque moyeu (15), la hauteur des deux ailettes d'arrêt (17) est plus en bas par rapport à l'ouverture de la partie orbitale en forme de r (16), et il y a une languette (45) placée sur la partie frontale dudit couvercle supérieur ; cette languette (45) est bloquée avec le pont de jonction (19) sur la partie frontale de la base inférieure (1) pour maintenir serré ledit couvercle supérieur (4) ; le couvercle supérieur (4) est composé d'un panneau en verre (40), un élément de raccordement arrière (41) en plastique et un élément de raccordement frontal (43) en plastique ; une tige avec pivot pour joint court (42) qui à son tour sort des deux côtés de l'extrémité arrière de l'élément de jonction arrière (41) et un joint placé sur la partie frontale de l'élément de jonction frontal (43) ; ce panneau en verre (40) est bloqué entre l'extrémité frontale de l'élément de raccordement arrière (41) et l'extrémité arrière de l'élément de raccordement frontale (43), les deux tiges étant à pivot court (42) du couvercle supérieur (4) à leur tour adaptées pour coulisser vers le bas le long le parcours orbital en r (16), en correspondance de l'extrémité arrière de la base inférieure (1), glisse enfin jusqu'au fond de la partie orbitale (16), la surface du fond de l'élément de raccordement arrière (41) du couvercle supérieur (4) étant bloquée par la surface arrière du corps de la plaque (30) électrique chauffante pour frire/rôtir (3), tandis que la surface supérieure de l'élément de raccordement arrière (41) est tenue par deux parois de bloc (17) de la base inférieure (1), donc le couvercle supérieur (4) reste incliné.

2. Appareil pour frire/rôtir avec couvercle rabattable selon revendication 1, avec plaque pour le recueil de l'huile (2) située à l'intérieur de la base inférieure (1).

3. Appareil pour frire/rôtir avec couvercle rabattable selon revendication 1, où, ledit couvercle supérieur (4) est soulevé pour ouvrir l'appareil et reste incliné par rapport à la plaque (3) pour frire/rôtir.
